# EUROPEAN PATENT APPLICATION

(11) **EP 2 927 485 A1**
(43) Date of publication of application: **07.10.2015**
(21) Application number: 14382119.7
(22) Date of filing: 31.03.2014
(51) Int. Cl.: F03D 11/00, F03D 1/00

(54) **Aligning wind turbine components**

(71) Applicant: Alstom Renovables España, S.L., 08005 Barcelona (ES)
(72) Inventor: Bescos, Javier, 08034 Barcelona (ES); Martin, Luís María, 08005 Barcelona (ES); Gil Mollà, Isaac, 44000 Nantes (FR)
(74) Representative: ZBM Patents - Zea, Barlocci & Markvardsen

(57) **Abstract**

A method for aligning wind turbine components is provided, the wind turbine components include, a first component comprising fasteners, a second component comprising openings and one or more centering items, the method includes attaching a guiding element to the first component, wherein the guiding element comprises openings, one or more centering elements and a main body; the method further includes bringing the first component and the second component in proximity of each other, aligning the centering elements of the guiding element with the corresponding centering items of the second component and coupling the centering elements to the corresponding centering items, and introducing the fasteners of the first component into the openings of the second component. A guiding element for aligning a first wind turbine component with a second wind turbine component is also provided, as well as a wind turbine components and wind turbines comprising such a guiding element.

## Description

The present disclosure relates to methods for aligning wind turbine components and guiding elements for doing the same. Specifically, it relates to methods and guiding elements for mounting a first wind turbine component to a second wind turbine component.

### BACKGROUND ART

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly or through the use of a gearbox. This way, the generator produces electricity which can be supplied to the electrical grid.

During installation, one or more blades are to be mounted to the wind turbine hub. The hub comprises a plurality of annular mounting flanges with openings. The blade comprises a flange with a plurality of fasteners, such as bolts, or pins or studs at its blade root. During installation, these fasteners are to be fitted into the openings in the mounting flanges of the hub.

Due to the manufacturing process of the blades, the mounting surface of the blades may not be perfectly circular. Additionally, the number of fasteners may be relatively high and it thus becomes very difficult to fit each of the fasteners of the blade in their corresponding hole on the hub. Another complicating factor is that during installation, as a blade is hoisted, the wind may cause undesired movements.

Misalignment of the fasteners with the holes can lead to an increase in vibrations, and material stresses. In order to better align all fasteners with their corresponding holes, manual help of the installation may often be required. This may lead to an increase in the cost of installation and also in the risk of installation to the operators.

One solution may be to use specific guiding pins longer than the pre-mounted fasteners situated in the first wind turbine component and/or enlarging the diameter of the holes in the second wind turbine element flange to gain some clearance between fasteners in the first wind turbine element and holes in the second wind turbine element.

One drawback of the first mentioned solution may be that the guiding pins are helping to ensure the alignment, however, since the manufacturing techniques of blade flanges do not ensure a perfect alignment of the fasteners in perpendicular direction to the second wind turbine flange face, a perfect alignment of the flanges does not guarantee the proper alignment of all the fasteners of the first wind turbine component and the holes of the second wind turbine component, and thus some of the studs may remain unaligned with their holes. With this solution it may thus be necessary for operators to use e.g. a soft hammer to guide the fasteners of the first wind turbine element with their corresponding holes in the second wind turbine element.

A drawback of the second solution may be that there is a limit in the clearance available from increasing the diameter of the flange holes of the second wind turbine element. This solution may negatively affect the structural performance of the joint between the hub and the blade.

One problem that in any event remains unsolved is that the assembly operation still requires high precision movements in lifting, and thus require maneuvering and some manual help to ensure that the fasteners of the first wind turbine component enter in their corresponding holes of the second wind turbine components.

These problems do however not only arise when mounting a blade to a hub. Similar problems may arise when mounting a nacelle to a top of a wind turbine tower or when mounting one tower section on top of another one. Also these components may require a joint involving a large number of fasteners. Furthermore, tower sections may deform during storage and transportation under their own weight such that misalignment is a common problem.

The examples of methods and components of the present disclosure seek to at least partially reduce one or more of the aforementioned problems.

### SUMMARY

In a first aspect a method for mounting wind turbine components is provided. The wind turbine components including a first wind turbine component comprising a plurality of fasteners, and a second wind turbine component comprising a plurality of openings and one or more centering items. The method comprises attaching a guiding element to the first wind turbine component, the guiding element comprises a plurality of openings adapted to be fitted around the fasteners and one or more centering elements. The method further includes arranging the first wind turbine component and the second wind turbine component in proximity of each other, aligning the centering elements of the guiding element with the corresponding centering items of the second wind turbine component and coupling the centering elements of the guiding element to the corresponding centering items of the second wind turbine component. Finally, the plurality of fasteners of the first wind turbine component may be introduced into the plurality of openings of the second wind turbine component.

It has been found that a guiding element may be mounted around the fasteners of the first wind turbine component with a relatively small clearance between the fasteners of the first wind turbine component and the openings of the guiding element, thus ensuring that the fasteners of the first wind turbine element are in the correct position according to the pattern formed by the openings in the guiding element. Centering elements may be arranged on the guiding element and specific centering items may be located in the second wind turbine component corresponding to each centering element of the first wind turbine component. Then, the centering elements of the guiding element may be coupled to the centering items located in the second wind turbine component and the correct alignment of the first wind turbine component with the second wind turbine component is achieved. The guiding element ensures the correct alignment of the fasteners of the first wind turbine element with the openings of the second wind turbine component. This way, a first wind turbine component may be aligned with a second wind turbine component in a relatively easy manner and thus attachment of the components to each other is facilitated.

Optionally, the guiding element may remain after the installation as a part of the wind turbine with no interferences in the normal performance of the wind turbine. In this case, the dismantling of the guiding element is avoided and this may save time during installation.

Alternatively, the guiding element may be removed after the alignment and installation of the wind turbine elements, the guiding element may be provided with a plurality of grooves and these grooves may be situated along an outer circumference part of the guiding element. The plurality of fasteners of the first wind turbine element may be located in the grooves. The guiding element may be divided in at least two parts and slipped out of the fasteners with no interferences in the normal performance of the wind turbine. In this case, the guiding element may be reused in the alignment of some other wind turbine components.

In further implementations, the guiding element is placed over an elastic element to keep the guiding element in place during lifting. In one example, the elastic element may be implemented as a spring. This implementation may improve the stability and the performance of the guiding element during lifting.

In some implementations the guiding element may be pre-installed in the first wind turbine component and mounted in or near the distal end of the fasteners of the first wind turbine component and may be free to slide along the fasteners of the first wind turbine element.

Optionally, the alignment occurs before operation of the wind turbine, i.e. during installation of the wind turbine or during repair. When the wind turbine components have been hoisted and properly positioned, the misalignment appears. Then, by using the guiding element, alignment may be improved.

In some examples, the centering elements of the guide element may be holes, and the centering items of the second wind turbine element may be fasteners and, alternatively, the centering elements of the guide element may be fasteners and the centering items of the second wind turbine element may be holes. The reasoning is that the guide element may be suitable for different designs in wind turbine elements.

The wind turbine components that may be most complicated to mount to each other due to problems of alignment may be the blades of a wind turbine and the rotor hub of a wind turbine. However, problems of misalignment may also occur when mounting two tower segments to each other or when mounting the nacelle on the top of the tower.

In a second aspect, the present disclosure provides a guiding element for aligning a first wind turbine component including a plurality of fasteners with a second wind turbine component including a plurality of holes, comprising a plurality of openings adapted to be fitted around the fasteners of the first wind turbine component and at least one centering element.

In yet a further aspect, a wind turbine component is provided comprising a mounting flange, and a plurality of fasteners mounted along the mounting flange, and further comprising such a guiding element. The wind turbine component may be a blade, a nacelle or a tower segment.

In yet another aspect, a wind turbine is provided comprising a rotor hub, a plurality of blades mounted on the hub and a guiding element arranged between each of the blades and the rotor hub.

### BRIEF DESCRIPTION OF THE DRAWINGS

Non-limiting examples of the present disclosure will be described in the following, with reference to the appended drawings, in which:
Figure 1 is an illustration of a block diagram describing an example of a method for aligning wind turbine components;
Figure 2 shows an example of a guiding element for aligning wind turbine components according to an embodiment of the present invention;
Figure 3 shows an example of a guiding element pre-installed in the blade according to an implementation;
Figure 4a-4e illustrates various steps of an example of a method for aligning a wind turbine blade with a wind turbine hub; and
Figure 5 shows another example of a guiding element.

### DETAILED DESCRIPTION

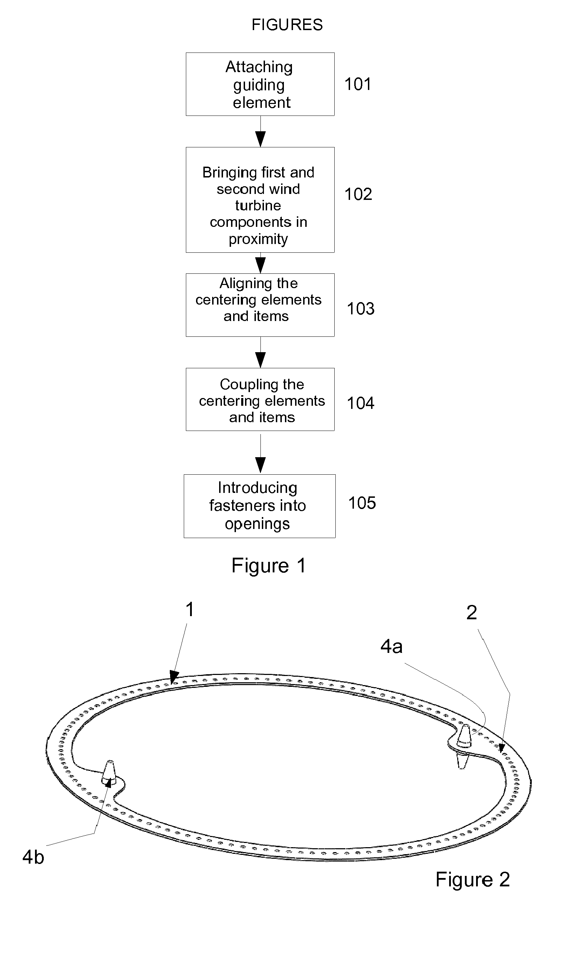

Fig 1 is an illustration of a block diagram describing an example of a method for aligning wind turbine components. A first wind turbine component may be provided, such as e.g. a wind turbine tower section, or a blade or a nacelle. The first wind turbine component may comprise a plurality of fasteners, such as bolts or pins or studs. The second wind turbine component may comprise a plurality of holes in which the fasteners are to be fitted in order to assemble the first component with the second component.

At block 101, a guiding element may be attached to the first wind turbine component. The guiding element may comprise a plurality of openings such that it may be fitted around the fasteners. The guiding element may further have a centering element which is arranged to cooperate with a centering item on the second wind turbine component.

At block 102, the first wind turbine component and the second wind turbine component may be arranged in proximity of each other. This may involve either moving the first wind turbine component, or moving the second wind turbine component, or moving both.

At block 103, the centering elements of the first wind turbine component may be aligned with the centering items of the second wind turbine component. At block 104 the centering elements of the first wind turbine component may be coupled to the centering items of the second wind turbine component, thus resulting in the fasteners of the wind turbine component being aligned with the openings of the second wind turbine component, block 105.

At block 105 the plurality of fasteners of the first wind turbine component may be introduced into the plurality of openings of the second wind turbine component and the first wind turbine component may be assembled to the second wind turbine component.

Fig 2 shows an example of a guiding disc (1) for aligning wind turbine components. The guiding element may be attached to a first wind turbine component. Schematically indicated in figure 2 are the guiding disc (1), a plurality of holes (2) and two centering pins (4a, 4b). Many wind turbine components that require assembly have a substantially annular mounting surface, for example a mounting flange of a hub and a mounting flange of a blade. The shape of the guiding disc may be adapted in accordance with the wind turbine components that are to be aligned and assembled. The centering pins may be tapered such that entry into a corresponding hole is facilitated.

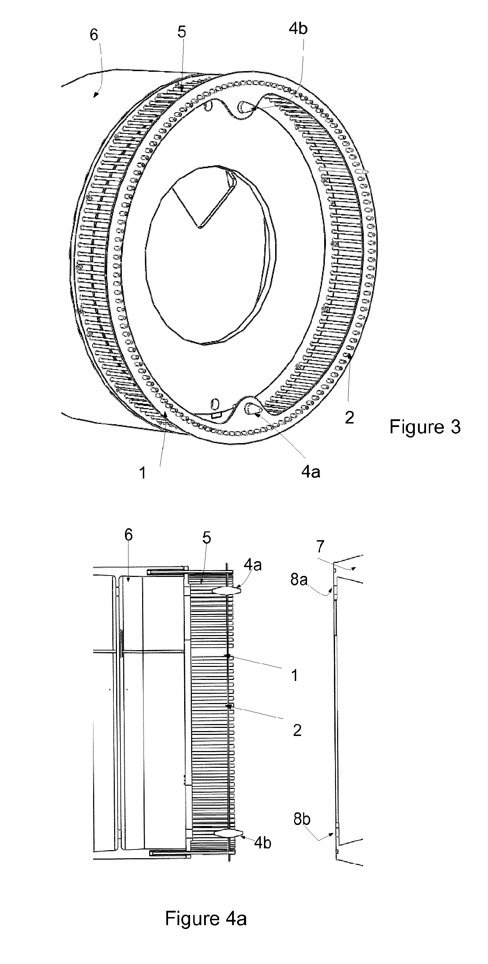

Fig 3 shows an example of a guiding disc (1) being pre-assembled with a blade (6). The guiding disc (1) of figure 3 may comprise a plurality of holes (2) and two centering pins (4a, 4b). The blade (6) may comprise a plurality of studs (5). In this particular example, the guiding disc (1) is pre-assembled in the blade (6) and supported by the plurality of studs (5). The disc may be free to slide along the plurality of studs (5). There is only a relatively small clearance between the plurality of studs (5) and the plurality of holes (2) so that the guiding disc (1) ensures that the plurality of studs (5) may be in the correct position. For a mounting process, it may be beneficial to arrange the guiding disc at or near a distal end of the fasteners, in this case, the studs.

Fig 4a illustrates a possible first step in an example of a method of aligning a blade (6) and a rotor hub (7). A guiding disc (1) may be pre-assembled in the blade (6). For a mounting process, it may be beneficial to arrange the guiding disc at or near a distal end of the fasteners, in this case, the studs.

The guiding disc (1) shown in this example may be similar to the one shown in figure 2, and the same reference signs are used to denote the same components. The blade (6) may be similar to the one show in figure 3, and the same reference signs are used to denote the same components.

The blade (6) and the guiding disc (1) may be approximated to the rotor hub (7), by a hoisting apparatus (not shown) such as e.g. a crane. The rotor hub (7) may comprise two centering holes (8a, 8b) for the coupling of the centering pins (4a, 4b) and a plurality of holes (not visible in this side view) along a mounting flange for mounting of the blade (6).

In an alternative example, the two centering pins (4a, 4b) could instead be two holes and the two hub holes (8a, 8b) could instead be two centering pings. Another number of centering elements may also be used in further alternatives.

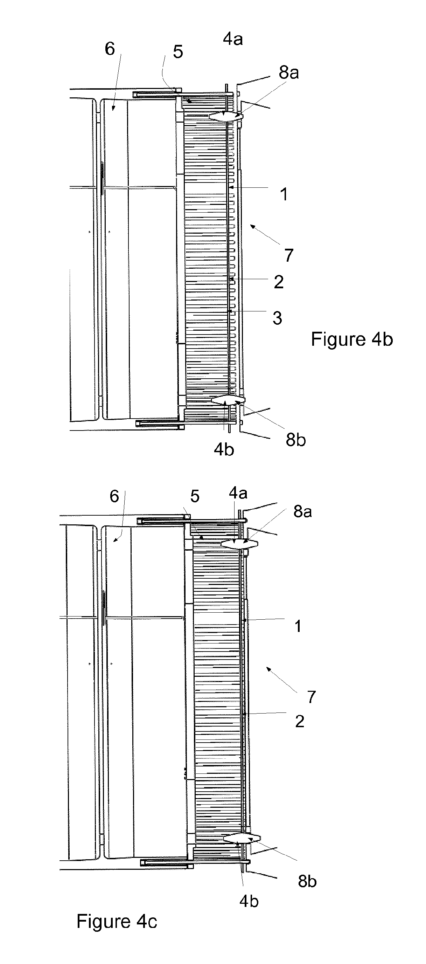

Fig 4b illustrates a possible second stage in the method of aligning a blade (6) and a rotor hub (7).

In this second stage, the guiding disc (1) and the rotor hub (7) may be aligned through the centering pins (4a, 4b). The two centering pins (4a, 4b) may be first aligned with the centering holes (8a, 8b) and the two centering pins (4a, 4b) may be introduced into the holes (8a, 8b). This may facilitate alignment even under high winds conditions.

Figure 4c illustrates a possible third stage in the method of aligning a blade (6) and a rotor hub (7).

In this third stage, the plurality of studs (5) of the blade (6) may be inserted into the plurality of holes (not shown) of the rotor hub (7). Due to the previous insertion of the centering pins (4a, 4b), the plurality of studs (5) of the blade (6) may be properly aligned with the corresponding plurality of holes (not shown) of the rotor hub (7) and the assembly is thus made much easier.

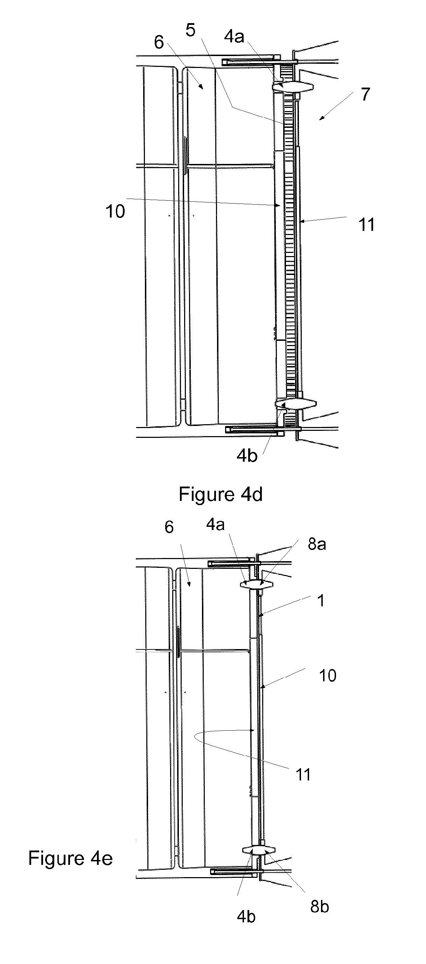

Figure 4d illustrates a possible fourth stage in the method of aligning a blade (6) and a rotor hub (7). The two components, i.e. the blade and the hub have been brought closer together.

Figure 4e illustrates a possible fifth stage in the method of aligning a blade (6) and a rotor hub (7), wherein the blade flanges (10) and the hub flanges (11) may be assembled, the guiding disc (1) in this case is depicted remaining inside the assembly between the blade (6) and the rotor hub (7).

In some other implementations an elastic element (not shown) may be placed to connect the guiding disc (1) and the blade (6) keeping the guiding disc (1) in place during the lifting and approximation to the rotor hub.

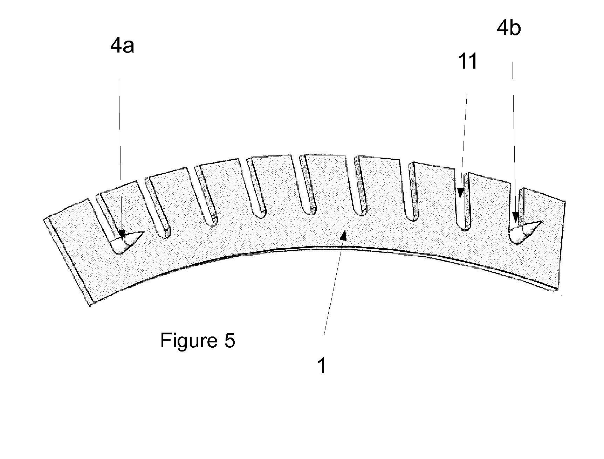

Figure 5 shows a three dimensional detail and a view of an alternative example of a guiding element. The guiding element (1) may be an annular sector that defines a plurality of grooves (11) or notches situated along an outer circumference of the guiding element. The grooves may be equidistant to each other.

In this particular implementation two centering pins (4a, 4b) may be situated in two of the grooves. The guiding element may be fitted around fasteners (provided on a wind turbine component such as a blade), such that a fastener is located in each of the grooves. In an alternative example, no fastener is provided for the grooves in which a centering pin is provided.

The guiding element (1) may comprise two or more of annular sectors. A small space may be provided between one sector and another such that the depicted sectors may be slipped out from between the fasteners and from between the centering pins once proper alignment of the fasteners with corresponding holes has been achieved. The other sectors could comprise additional centering pins.

This alternative permits removal of the guiding element sectors, so that it can be used for the installation of a subsequent component. Consequently, this alternative results in both a potentially lower cost and a reduced weight of the structure.

Similarly as in other illustrated examples, the centering pins 4a and 4b may be introduced into corresponding holes of a second wind turbine component comprising holes in which the fasteners are to be fitted. Alignment of the fasteners and the holes may be achieved in a similar manner. However, before complete attachment of a first component with a second component is achieved, the guiding element may be removed.

Although only a number of examples have been disclosed herein, other alternatives, modifications, uses and/or equivalents thereof are possible. In particular, similar devices and methods as those disclosed with respect to the mounting of a blade to a hub may also be used when assembling other wind turbine components.

Furthermore, all possible combinations of the described examples are also covered. Thus, the scope of the present disclosure should not be limited by particular examples, but should be determined only by a fair reading of the claims that follow.

## Claims

1. A method for mounting wind turbine components, the wind turbine components including a first wind turbine component comprising a plurality of fasteners, and a second wind turbine component comprising a plurality of openings and one or more centering items, the method comprising:
attaching a guiding element to the first wind turbine component, wherein the guiding element comprises a plurality of openings adapted to be fitted around the fasteners, and one or more centering elements;
bringing the first wind turbine component and the second wind turbine component in proximity of each other;
aligning the centering elements of the guiding element with the corresponding centering items of the second wind turbine component;
coupling the centering elements of the guiding element to the corresponding centering items of the second wind turbine component;
introducing the plurality of fasteners of the first wind turbine component into the plurality of openings of the second wind turbine component.

2. A method according to claim 1, wherein the centering elements of the guiding element comprise one or more holes and the centering items of the second wind turbine component comprise one or more pins.

3. A method according to claim 1, wherein the centering elements of the guiding element comprise one or more pins and the centering items of the second wind turbine component comprise one or more holes.

4. A method according to any of claims 1-3, wherein the guiding element is mounted at or near a distal end of the plurality of fasteners.

5. A method according to claim 4, wherein after attaching the first wind turbine component to the second wind turbine component, the guiding element is fixed between the first wind turbine component and the second wind turbine component.

6. A method according to any of claims 1-4, wherein the guiding element comprises a plurality of grooves situated along an outer circumference part and is divided in at least two sections.

7. A method according to claim 6, wherein the at least two sections are removed slipping out of the fasteners of the first wind turbine component by means of the plurality of grooves.

8. A method according to any of claims 1-7, wherein the guiding element is placed over at least one elastic component.

9. A method according to any of claims 1-8, wherein the first wind turbine component is a blade of a wind turbine and the second wind turbine component is a rotor hub of a wind turbine.

10. A method according to any of claims 1-8, wherein the first wind turbine component is a nacelle and the second wind turbine component is a tower sector.

11. A method according to any of claims 1-8, wherein the first wind turbine component is a first tower sector and the second wind turbine component is a second tower sector.

12. A guiding element for aligning a first wind turbine component including a plurality of fasteners with a second wind turbine component including a plurality of holes, comprising a plurality of openings adapted to be fitted around the fasteners of the first wind turbine component;
at least one centering element.

13. A guiding element according to claim 12, wherein the at least one centering element is one the following:
- a hole;
- a fastener.

14. A wind turbine blade comprising a mounting flange, and a plurality of fasteners mounted along the mounting flange, and further comprising a guiding element according to claim 12 or 13.

15. A wind turbine comprising a rotor hub, a plurality of blades mounted on the hub and a guiding element according to claim 12 or 13 arranged between each of the blades and the rotor hub.
